**Europäisches Patentamt**

**European Patent Office**

**Office européen des brevets**

(11) Veröffentlichungsnummer: **0 531 862 B1**

## EUROPÄISCHE PATENTSCHRIFT

(45) Veröffentlichungstag der Patentschrift: **20.12.95**

(21) Anmeldenummer: **92114908.4**

(22) Anmeldetag: **01.09.92**

Die Akte enthält technische Angaben, die nach dem Eingang der Anmeldung eingereicht wurden und die nicht in dieser Patentschrift enthalten sind.

(51) Int. Cl.⁶: **C08G 18/80**, C08G 18/62, C08G 18/78, C08G 18/79, C09D 175/04

(54) **Verfahren zur Herstellung von Pulverlacken und ihre Verwendung**

(30) Priorität: **12.09.91 DE 4130336**

(43) Veröffentlichungstag der Anmeldung:
**17.03.93 Patentblatt 93/11**

(45) Bekanntmachung des Hinweises auf die Patenterteilung:
**20.12.95 Patentblatt 95/51**

(84) Benannte Vertragsstaaten:
**AT BE CH DE ES FR GB IT LI NL SE**

(56) Entgegenhaltungen:
EP-A- 0 000 963
DE-A- 2 527 430
GB-A- 2 080 305
US-A- 3 857 818
US-A- 3 993 849

(73) Patentinhaber: **BAYER AG**

**D-51368 Leverkusen (DE)**

(72) Erfinder: **Wamprecht, Christian, Dr.**
**Regattastrasse 20**
**W-4040 Neuss 22 (DE)**
Erfinder: **Halpaap, Reinhard, Dr.**
**In der Hildscheid 6**
**W-5068 Odenthal-Glöbusch (DE)**
Erfinder: **Kreuder, Hans-Joachim, Dr.**
**Auf Rothenfeld 23 a**
**W-4154 Tönisvorst 2 (DE)**
Erfinder: **Bock, Manfred, Dr.**
**Haydnstrasse 18**
**W-5090 Leverkusen (DE)**
Erfinder: **Meixner, Jürgen, Dr.**
**Josef-Brocker-Dyk 56**
**W-4150 Krefeld (DE)**
Erfinder: **Rettig, Rainer, Dr.**
**c/o Sumitomo Bayer Urethane Ltd., LS-Division**
**13-26, Kukuchi, 3-chome**
**Amagasaki (JP)**
Erfinder: **Schultz, Wolfgang**
**Erlenweinstrasse 23**
**W-4150 Krefeld 11 (DE)**

**Beschreibung**

Die Erfindung betrifft ein neues Verfahren zur Herstellung von Pulverlacken auf Basis von Hydroxylgruppen aufweisenden Copolymerisaten und Ketoxim-blockierten Lackpolyisocyanaten und die Verwendung der nach dem Verfahren erhältlichen Pulverlacke zur Herstellung von Beschichtungen auf hitzeresistenten Substraten.

Oxim-blockierte Polyisocyanate und ihre Verwendung in Pulverlacken sind bereits bekannt (z.B. EP-A-432 257 (WO 91/00267), US-PS 3 857 818, DE-OS 2 200 342 oder Japanische Patentanmeldung 70-94 941, Veröffentlichungs-Nr. 75-27 057 (C.A. 84: 107 163 s)). In einigen dieser Veröffentlichungen wird auch die Kombination der Oxim-blockierten Polyisocyanate mit hydroxyfunktionellen Copolymerisaten erwähnt. So beschreibt beispielsweise die letztgenannte Japanische Publikation die Kombination von (i) Xylylendiisocyanat, dessen Isocyanatgruppen teilweise mit einem speziellen Oxim blockiert sind mit (ii) einem hydroxyfunktionellen Polyacrylat. Beispiel 4 der US-PS 3 857 818 beschreibt die Kombination (i) eines hochschmelzenden, Butanonoxim-blockierten Isocyanat-Prepolymeren auf Basis von 4,4'-Diisocyanato-dicyclohexylmethan mit (ii) einem bei Raumtemperatur festen hydroxyfunktionellen Polyacrylat.

Derartige Pulverlacke weisen insbesondere den Nachteil auf, daß sie erst bei relativ hohen Temperaturen eingebrannt werden können, weil wegen der hohen Schmelzpunkte der Einzelkomponenten bei mäßig erhöhten Temperaturen nur schlechte Verlaufeigenschaften resultieren.

Weiterhin ist von Nachteil, daß mit derartigen Pulverlacken nur spröde, unflexible Lackfilme erhalten werden, die z.B. für die Lackierung von Automobilen, wo Lacke mit zähelastischem, flexiblem Eigenschaftsniveau benötigt werden, nicht geeignet sind.

US-A-3 993 849 beschreibt Pulverlacke auf Basis von Polyacrylatharzen und Polyisocyanaten, bei deren Herstellung Hydroxylgruppen aufweisende Polyesterharze eingesetzt werden.

Es war daher die der Erfindung zugrundeliegende Aufgabe, neue Pulverlacke auf Basis von Polyacrylatharzen und blockierten Polyisocyanaten zur Verfügung zu stellen, die bei vergleichsweise niedrigen Temperaturen von 120 bis 160° C ausgehärtet werden können, und die bereits bei vergleichsweise niederen Temperaturen einwandfrei verlaufen und die Herstellung von hochwertigen Lacküberzügen gestatten.

Diese Aufgabe konnte mit der Bereitstellung des nachstehend näher beschriebenen erfindungsgemäßen Verfahrens gelöst werden. Erfindungswesentlich sind sowohl die Auswahl der Bindemittelkomponenten A) (hier insbesondere die Auswahl der zur Herstellung der Komponente A) eingesetzten Monomeren) und B) als auch die Mitverwendung von Katalysatoren C) als auch die Art der Herstellung der Pulverlacke über die Zwischenstufe einer homogenen Lösung der genannten Einzelbestandteile, wobei noch weitere Hilfs- und Zusatzstoffe D) mitverwendet werden können.

Gegenstand der Erfindung ist ein Verfahren zur Herstellung von Pulverlacken mit einer Glasübergangstemperatur von 20 bis 80° C durch Vermischen von A) einer Polyolkomponente, B) einer Polyisocyanatkomponente mit blockierten Isocyanatgruppen, C) einer Katalysatorkomponente, bestehend aus mindestens einem Katalysator für die Reaktion zwischen blockierten Isocyanatgruppen und Hydroxylgruppen, und gegebenenfalls D) weiteren aus der Pulverlacktechnologie bekannten Hilfs- und Zusatzmitteln, wobei die Komponenten A) und B) in solchen Mengen zum Einsatz gelangen, daß in dem Gemisch ein Äquivalentverhältnis von blockierten Isocyanatgruppen zu Hydroxylgruppen von 0,5:1 bis 1,5:1 vorliegt, dadurch gekennzeichnet, daß

die Polyolkomponente A) eine Hydroxylzahl von 30 bis 155 und eine Glasübergangstemperatur von 30 bis 100° C aufweist und aus mindestens einem hydroxyfunktionellen Copolymerisat aus

a) 10 bis 60 Gew.-Teilen Methylmethacrylat,
b) 5 bis 50 Gew.-Teilen (Cyclo)Alkylestern der Acryl- und/oder Methacrylsäure mit 2 bis 12 Kohlenstoffatomen im (Cyclo)Alkylrest,
c) 5 bis 40 Gew.-Teilen Vinylaromaten,
d) 10 bis 35 Gew.-Teilen Hydroxylalkylester der Acryl- und/oder Methacrylsäure und
e) 0 bis 5,0 Gew.-Teilen Acrylsäure und/oder Methacrylsäure
besteht, wobei die Summe der Gew.-Teile der Komponenten a) bis e) 100 ergibt,
die Polyisocyanatkomponente B) eine Glasübergangstemperatur von -45 bis +45° C aufweist und aus mindestens einem Ketoxim-blockierten Polyisocyanat, ausgewählt aus der Gruppe bestehend aus Biuret-, Isocyanurat-, Uretdion- und/oder Urethangruppen aufweisenden Lackpolyisocyanaten auf Basis von 1,6-Diisocyanatohexan und Isocyanuratgruppen und gegebenenfalls Uretdiongruppen aufweisenden Lackpolyisocyanaten auf Basis von Gemischen aus 1,6-Diisocyanatohexan und 1-Isocyanato-3,3,5-trimethyl-5-isocyanatomethyl-cyclohexan jeweils in mit Ketoxim blockierten Isocyanatgruppen, besteht,
und man zur Herstellung der Pulverlacke die Komponenten A), B), C) und gegebenenfalls D) in einem inerten Lösungsmittel oder Lösungsmittelgemisch mit einem zwischen 50 und 150°C liegenden Siedepunkt oder -bereich homogen löst, dann die dabei resultierende Lösung vom Lösungsmittel befreit und gleichzeitig und/oder anschließend den hierbei anfallenden Feststoff in die Pulverform überführt.

Gegenstand der Erfindung ist auch die Verwendung der nach diesem Verfahren erhältlichen Pulverlacke gegebenenfalls nach ihrer Abmischung mit weiteren Hilfs- und Zusatzmitteln zur Herstellung von Beschichtungen auf beliebigen hitzeresistenten Substraten nach den Methoden der Pulverlacktechnologie.

Die Polyolkomponente A) weist eine Hydroxylzahl von 30 bis 155, vorzugsweise von 40 bis 120 mg KOH/g und eine nach der Differentialthermoanalyse (DTA) bestimmte Glasübergangstemperatur Tg von 30 bis 100°C auf und wird durch Copolymerisation des bereits vorstehend genannten Monomerengemischs erhalten.

Bei den Monomeren b) handelt es sich vorzugsweise um (Cyclo)Alkylester der Acryl- oder Methacrylsäure mit 2 bis 12 Kohlenstoffatomen im (Cyclo)Alkylrest. Beispiele geeigneter bzw. bevorzugt geeigneter Monomerer b) sind Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat und 3,3,5-Trimethylcyclohexylmethacrylat.

Als Monomere c) kommen z.B. Styrol, Vinyltoluol und α-Ethylstyrol in Betracht.

Geeignete Monomere d) sind Hydroxyalkylester der genannten Säuren mit 2 bis 6, vorzugsweise 2 bis 4 Kohlenstoffatomen im Hydroxyalkylrest wie z.B. 2-Hydroxyethyl(meth)acrylat, Hydroxypropyl(meth)acrylat (bei der Anlagerung von Propylenoxid an (Meth)Acrylsäure entstehendes Isomerengemisch), 4-Hydroxy-n-butylacrylat oder auch Anlagerungsprodukte von ε-Caprolacton an derartige einfache Hydroxyalkylester. Der Begriff "Hydroxyalkylester" soll somit auch Estergruppen aufweisende Reste umfassen, wie sie durch Anlagerung von ε-Caprolacton an einfache Hydroxyalkylester entstehen. Weiterhin sind auch Umsetzungsprodukte von Glycidyl(meth)acrylat mit gesättigten Monocarbonsäuren, sowie Umsetzungsprodukte von (Meth)Acrylsäure mit gesättigten Monoepoxiden, die zusätzlich noch OH-Gruppen tragen können als "Hydroxyalkylester" der (Meth)Acrylsäure anzusehen und daher ebenfalls als Monomere d) geeignet.

Besonders bevorzugt besteht die Polyolkomponente A) aus hydroxyfunktionellen Copolymerisaten aus
a) 15 bis 50 Gew.-Teilen Methylmethacrylat,
b) 10 bis 45 Gew.-Teilen an Alkylestern der Acryl- und/oder Methacrylsäure mit 2 bis 12 Kohlenstoffatomen im Alkylrest,
c) 5 bis 35 Gew.-Teilen Styrol,
d) 10 bis 30 Gew.-Teilen 2-Hydroxyethylmethacrylat und/oder Hydroxypropylmethacrylat (= Anlagerungsprodukt von Propylenoxid an Methacrylsäure, bestehend im wesentlichen aus 2-Hydroxypropylmethacrylat und 2-Hydroxy-1-methyl-ethyl-methacrylat im Verhältnis von ca. 3:1) und
e) 0,1 bis 3 Gew.-Teilen Acrylsäure und/oder Methacrylsäure
wobei die Summe der Gewichtsteile der Komponenten a) bis e) 100 ergibt.

Bei der Herstellung der hydroxyfunktionellen Copolymerisate können innerhalb der oben angegebenen Mengenanteilsgrenzen jeweils beliebige Gemische der Monomeren a) bis e) verwendet werden, mit der Maßgabe, daß diese Auswahl bei der Herstellung der Copolymerisate so erfolgt, daß die resultierenden Copolymerisate Hydroxylzahlen und Glasübergangstemperaturen innerhalb der obengenannten Bereiche aufweisen, Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Ethylacrylat, n-Butylacrylat, Isobutylacrylat und 2-Ethylhexylacrylat.

"Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z.B. Styrol, Vinyltoluol und α-Ethylstyrol.

Die Herstellung der hydroxyfunktionellen Copolymerisate A) erfolgt durch radikalisch initiierte Copolymerisation der obengenannten Monomeren in geeigneten organischen Lösungsmitteln. Dabei werden die Monomeren bei Temperaturen von 60 bis 180°C, vorzugsweise 80 bis 160°C, in Gegenwart von Radikalbildnern und gegebenenfalls Molekulargewichtsreglern copolymerisiert.

Vorzugsweise werden zur Herstellung der Copolymerisate Lösungsmittel der gleichen Art eingesetzt, wie sie auch anschließend zur Durchführung des erfindungsgemäßen Verfahrens benötigt werden. Diese Lösungsmittel weisen bei 1013 mbar einen Siedepunkt oder -bereich innerhalb des Temperaturbereichs von 50 bis 150, vorzugsweise 75 bis 130°C auf. Zur Herstellung der Copolymerisate und auch zur Durchführung des erfindungsgemäßen Verfahrens geeignete Lösungsmittel sind beispielsweise Aromaten, wie Toluol oder Xylol; Ester, wie Methylacetat, Ethylacetat, Isopropylacetat, n-Propylacetat, Isobutylacetat, n-Butylacetat oder Methyl-n-amylacetat; Ketone, wie 2-Propanon, 2-Butanon, 2-Pentanon, 3-Pentanon, 3-Methyl-2-butanon, 4-Methyl-2-pentanon, 5-Methyl-2-hexanon oder 2-Heptanon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere auch hergestellt werden, indem man die Reaktionsmischung mit konstanter Geschwindigkeit in einen Rührkessel einlaufen läßt, ohne das Polymer abzuführen.

Man kann beispielsweise auch einen Teil der Monomeren in Lösungsmitteln der genannten Art vorlegen und die restlichen Monomeren und Hilfsmittel getrennt oder gemeinsam in diese Vorlage bei der Reaktionstemperatur eintragen. Im allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Di-tert.-butylperoxid.

Zur Regelung des Molekulargewichtes der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen stehen dann zur Mischung mit den blockierten Polyisocyanaten B), der Katalysatorkomponente C) sowie Hilfs- und Zusatzmittel D) zur Verfügung.

Bei der Polyisocyanatkomponente B) handelt es sich um vorzugsweise vollständig Ketoxim-blockierte Lackpolyisocyanate, die in derart blockierter Form eine, mittels der Differentialthermoanalyse (DTA) bestimmte, Glasübergangstemperatur Tg von -45 bis +45, vorzugsweise -40 bis +20° C, eine mittlere Funktionalität von 2,0 bis 5,0, vorzugsweise 3,0 bis 5,0 und einen Gehalt an blockierten Isocyanatgruppen (berechnet als NCO, Molekulargewicht = 42) von 3,0 bis 20,0, vorzugsweise 12,0 bis 18,0 Gew.-% aufweisen.

Die Polyisocyanatkomponente B) besteht aus mindestens einem Polyisocyanat, ausgewählt aus der Gruppe bestehend aus Biuret-, Isocyanurat-, Uretdion- und/oder Urethangruppen aufweisenden Polyisocyanaten auf Basis von 1,6-Diisocyanatohexan mit ausschließlich Ketoxim-blockierten Isocyanatgruppen und aus Isocyanurat- und gegebenenfalls Uretdiongruppen aufweisenden Polyisocyanaten auf Basis von 1,6-Diisocyanatohexan und 1-Isocyanato-3,3,5-trimethyl-5-isocyanatomethyl-cyclohexan im Gewichtsverhältnis der Diisocyanate von 5:1 bis 1:5 mit ausschließlich Ketoxim-blockierten Isocyanatgruppen. Selbstverständlich ist auch die Verwendung von solchen Ketoxim-blockierten Polyisocyanaten möglich, die im gleichen Molekül mehrere unterschiedliche Gruppierungen der genannten Art enthalten. Die den blockierten Polyisocyanaten zugrundeliegenden unblockierten Polyisocyanate weisen im allgemeinen einen Restgehalt an zu ihrer Herstellung eingesetztem 1,6-Diisocyanatohexan von maximal 1,0 Gew.-%, vorzugsweise von maximal 0,5 Gew.-% auf. Besonders bevorzugt werden als Komponente B) Butanoxim-blockierte Biuretpolyisocyanate oder Isocyanuratpolyisocyanate auf Basis von 1,6-Diisocyanatohexan eingesetzt.

Die Herstellung der mit Ketoximen zu blockierenden Polyisocyanate erfolgt nach üblichen Verfahren, wie z.B. Biuretisierung, Dimerisierung, Trimerisierung oder Urethanisierung von entsprechenden monomeren Diisocyanaten. Diese Verfahren sind beispielsweise in den nachstehenden Publikationen beschrieben:

- Biuretgruppen aufweisende Polyisocyanate: DE-PS 1 101 394, DE-OS 1 570 632, DE-OS 2 308 015, DE-OS 2 437 130, DE-OS 2 654 745, DE-OS 2 803 103, DE-OS 2 808 801, DE-OS 2 918 739, DE-OS 3 007 679, DE-OS 3 403 277, DE-OS 3 403 278, DE-PS 3 700 209 und EP-A 3505.
- Uretdiongruppen aufweisende Polyisocyanate: DE-OS 2 502 934
- Urethangruppen aufweisende Polyisocyanate: US 3 183 112
- Isocyanuratgruppen aufweisende Polyisocyanate: DE-AS 1 667 309, DE-OS 3 100 262, DE-OS 3 219 608, DE-OS 3 240 613, EP-A 10 589, EP-A 57 653, EP-A 89 297 und EP-A 187 105.
- Urethan- und Isocyanuratgruppen aufweisende Polyisocyanate: EP-A 155 559, DE-OS 3 811 350.
- Urethan- und Biuretgruppen aufweisende Polyisocyanate: EP-A-320 703.

Zur Blockierung der Polyisocyanate gut geeignete Ketoxime sind beispielsweise solche des Molekulargewichtsbereichs 73 bis 200, beispielsweise auf Basis von aliphatischen oder cycloaliphatischen Ketonen wie 2-Propanon, 2-Butanon, 2-Pentanon, 3-Pentanon, 3-Methyl-2-butanon, 4-Methyl-2-pentanon, 3,3-Dimethyl-2-butanon, 2-2-Heptanon, 3-Heptanon, 4-Heptanon, 5-Methyl-3-heptanon, 2,6-Dimethyl-4-heptanon, Cyclopentanon, Cyclohexanon, 3-Methylcyclohexanon, 3,3,5-Trimethylcyclohexanon und 3,5,5-Trimethyl-2-cyclohexen-5-on. Bevorzugte Blockierungsmittel sind Acetonoxim, Butanonoxim und Cyclohexanonoxim.

Die Blockierungsreaktion der Isocyanatgruppen mit den zuvor genannten Blockierungsmitteln erfolgt zweckmäßig bei Temperaturen von 20 bis 120° C, vorzugsweise 20 bis 80° C. Die Blockierungsreaktion kann sowohl lösungsmittelfrei als auch in inerten, organischen Lösungsmitteln der bereits oben beispielhaft genannten Art durchgeführt werden.

Bei den Katalysatoren C) handelt es sich um übliche Katalysatoren für die Additionsreaktion von Hydroxylan Isocyanatgruppen. Zu nennen sind z.B. Metallverbindungen, insbesondere organische Zinnverbindungen und tert. Amine. Als organische Zinnverbindungen kommen vorzugsweise Zinn(II)-salze von Carbonsäuren, wie z.B. Zinn(II)acetat, Zinn(II)-octanoat, Zinn(II)-ethylhexanoat oder Zinn(II)-laurat und Zinn-(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht, gegebenenfalls als Gemische.

Als tert. Amine können z.B. Diazabicyclo(2,2,2)octan oder 1,5-Diazabicyclo(4,3,0)non-5-en eingesetzt werden.

Weitere Vertreter von geeigneten Katalysatoren sowie Einzelheiten über die Wirkungsweise von solchen Katalysatoren sind im Kunststoff-Handbuch-Band VII, herausgegeben von Vieweg und Höchtlen, Carl-Hanser-Verlag, München 1966, z.B. auf den Seiten 96 bis 102, beschrieben.

Bevorzugt werden Zinn(II)octanoat und/oder Dibutylzinn(IV)-dilaurat als Katalysator eingesetzt.

Die Katalysatoren werden im allgemeinen in Mengen von 0,1 bis 5, vorzugsweise 0,2 bis 3 Gew.-%, bezogen auf den Feststoffanteil der Komponenten A) und B) eingesetzt.

Bei den gegebenenfalls mitzuverwendenden Hilfs- und Zusatzmitteln D) handelt es sich um solche, die in den beim erfindungsgemäßen Verfahren einzusetzenden Lösungsmitteln löslich sind. Beispielhaft zu nennen sind Verlaufsmittel, wie z.B. Polybutylacrylat oder solche auf Basis von Polysilikonen, Lichtschutzmittel, wie z.B. sterisch gehinderte Amine oder UV-Absorber, z.B. Benztriazole oder Benzophenone.

Zur Durchführung des erfindungsgemäßen Verfahrens werden die Komponenten A) bis C) und gegebenenfalls D) in einem inerten organischen Lösungsmittel oder Lösungsmittelgemisch der bereits oben beispielhaft genannten Art gelöst, so daß Lösungen mit einem Feststoffgehalt von 10 bis 80, vorzugsweise 30 bis 60 Gew.-% resultieren. Vorzugsweise werden diejenigen Lösungsmittel eingesetzt, die bereits zur Herstellung der Copolymerisate und/oder gegebenenfalls vorab zum Lösen der Polyisocyanatkomponente B) verwendet worden sind. Bei der Herstellung dieser Lösungen wurden die Mengenverhältnisse der Komponenten A) und B) so gewählt, daß in den Lösungen ein Äquivalentverhältnis von blockierten Isocyanatgruppen der Komponente B) zu Hydroxylgruppen der Komponente A) von 0,5:1 bis 1,5:1, vorzugsweise 0,8:1 bis 1,2:1 vorliegt.

Anschließend werden die so erhaltenen Lösungen einem Lösungsmittelentfernungsprozeß unterworfen, wobei das Lösungsmittel bzw. das Lösungsmittelgemisch möglichst vollständig entfernt wird. Ein solcher Lösungsmittelentfernungsprozeß kann z.B. sein: Sprühtrocknung, Entgasung in spezieller oder handelsüblichen Ausdampfextrudern oder Schlangenrohrverdampfern, Destillation im Vakuum oder Hochvakuum.

Falls bei diesem Lösungsmittelentfernungsprozeß nicht unmittelbar verarbeitungsfähige Pulver anfallen, werden die resultierenden Festkörper in Anschluß an die Lösungsmittelentfernung in an sich bekannter Weise pulverisiert. Schließlich werden die entweder direkt während der Lösungsmittelentfernung anfallenden oder die im Anschluß an die Lösungsmittelentfernung durch Mahlen erhaltenen Pulver gegebenenfalls durch Sieben von groben Anteilen (beispielsweise von Anteilen mit einem über 0,1 mm liegenden Teilchendurchmesser) befreit.

Die so erhaltenen Pulver-Klarlacke weisen eine mittels der Differentialthermoanalyse (DTA) bestimmte Glasübergangstemperatur $T_g$ innerhalb des Bereichs von 2o bis 80° C, vorzugsweise 25 bis 75° C auf. Diese für die erfindungsgemäße Verwendbarkeit der Pulverlacke wesentliche Bedingung wird dann erfüllt, wenn bei der Herstellung der Pulverlacke ein geeignetes Verhältnis bezüglich der Glasübergangstemperaturen der Komponenten A) und B) zur Anwendung gelangt. Hat beispielsweise die blockierte Polyisocyanatkomponente B) eine Glasübergangstemperatur von unter 25° C, muß ein Copolymerisat A) als Bindemittelkomponente zur Anwendung kommen, das eine höhere Glasübergangstemperatur, z.B. 70° C aufweist, so daß der fertige Pulverlack eine Glasübergangstemperatur erreicht, die in dem obengenannten Bereich liegt.

Die nach dem erfindungsgemäßen Verfahren erhaltenen Pulver-Klarlacke können gewünschtenfalls in geeigneten Extrudern oder Knetern aufgeschmolzen und mit weiteren Hilfs- und Zusatzstoffen, insbesondere mit anorganischen oder organischen Pigmenten vermischt und homogenisiert werden. Im Falle einer derartigen Herstellung von pigmentierten Pulverlacken erfolgt die gegebenenfalls erforderliche Pulverisierung der beim erfindungsgemäßen Verfahren anfallenden Feststoffe selbstverständlich vorzugsweise nach ihrer Vereinigung mit den Pigmenten.

Die pulverförmigen Überzugsmittel können nach üblichen Pulverauftragsverfahren, wie z.B. elektrostatischem Pulversprühen oder Wirbelsintern, auf die zu überziehenden, hitzeresistenten Substrate aufgebracht werden. Die Härtung der Überzüge kann durch Erhitzen auf Temperaturen von 120 bis 200° C, vorzugsweise 120 bis 160° C, erfolgen. Man erhält dabei kratzfeste, lösungsmittel-und chemikalienbeständige Lackfilme mit sehr guten optischen und mechanischen Eigenschaften, die insbesondere eine gute Licht- und Wetterbeständigkeit aufweisen und somit für Außenanwendungen besonders geeignet sind. Erfindungsgemäß können beliebige, hitzeresistente Substrate, wie beispielsweise solche aus Glas oder Metallen, beschichtet werden. Ein bevorzugtes Einsatzgebiet für die erfindungsgemäß hergestellten Pulverlacke in unpigmentierter Form ist die Herstellung von Klarlackschichten bei der Automobillackierung.

Die in den nachfolgenden Beispielen genannten Teile und Prozente sind sofern nicht anders angegeben, Gewichtsteile bzw. Gewichtsprozente.

I. Allgemeine Herstellvorschrift für die Hydroxylgruppen enthaltenden Copolymerisate $A_1$ bis $A_4$

In einem 25-l-Edelstahldruckreaktor mit Rühr-, Kühl- und Heizvorrichtung sowie elektronischer Temperatursteuerung wird Teil I vorgelegt und auf Reaktionstemperatur aufgeheizt. Dann werden parallel Teil II (Zugabe über einen Zeitraum von insgesamt 4 Stunden) und Teil III (Zugabe über einen Zeitraum von insgesamt 5 Stunden) bei konstanter Temperatur zudosiert. Anschließend wird 2 Stunden bei der angegebenen Temperatur nachgerührt. Die erhaltenen Polymerlösungen werden zur Mischung mit den Komponenten B), C) und gegebenenfalls D) bereitgehalten.

Die Reaktionstemperaturen und die Zusammensetzungen der Teile I bis III sind in Tabelle 1 zusammen mit den Kenndaten der erhaltenen Copolymerisate aufgeführt.

Tabelle 1

Hydroxylgruppen enthaltende Copolymerisate $A_1$ bis $A_4$

(Mengenangaben in g)

| Copolymerisate | $A_1$ | $A_2$ | $A_3$ | $A_4$ |
|---|---|---|---|---|
| **Teil I** | | | | |
| Toluol | 9000 | 9000 | | 9000 |
| Methylisobutylketon | | | 9000 | |
| | | | | |
| **Teil II** | | | | |
| Methylmethacrylat | 3660 | 4328 | 3916 | 4308 |
| n-Butylmethacrylat | 2374 | 2690 | | |
| 2-Ethylhexylacrylat | | | | 1958 |
| n-Butylacrylat | | | 1958 | |
| Styrol | 1868 | 1258 | 1958 | 980 |
| 2-Hydroxyethyl-methacrylat | 1892 | 1418 | | |
| Hydroxypropyl-methacrylat* | | | 1836 | 2360 |
| Acrylsäure | 100 | 98 | | |
| Methacrylsäure | | | 122 | 186 |
| | | | | |
| **Teil III** | | | | |
| tert.-Butylperoxy-2-ethyl-hexanoat (70 %ig in Isododecan) | 438 | 582 | 582 | 582 |
| Toluol | 668 | 626 | | 626 |
| Methylisobutylketon | | | 628 | |
| | | | | |
| Polymerisations-temperatur (°C) | 125 | 110 | 115 | 110 |
| Festgehalt (%) | 50,7 | 50,1 | 50,2 | 51,2 |
| Viskosität bei 23°C (mPa.s) | 1880 | 1320 | 270 | 2720 |
| OH-Zahl (Festharz) | 80 | 60 | 70 | 90 |
| Säurezahl (Festharz) | 7,4 | 4,8 | 3,9 | 6,0 |
| Glasübergangs-temperatur (°C) | 67 | 66 | 60 | 54 |

---

* Anlagerungsprodukt von Propylenoxid an Methacrylsäure

II. Butanonoxim-blockierte Polyisocyanate B)

Polyisocyanat $B_1$

In einen 4-l-Vierhalskolben mit Rührer, Rückflußkühler, Thermometer und Tropftrichter werden 955 g eines Biuretgruppen aufweisenden Polyisocyanats auf Basis von 1,6-Diisocyanatohexan mit einem NCO-Gehalt von ca. 22,0 % und 460 g Toluol eingewogen. Dann werden bei 25° C 445 g Butanonoxim innerhalb 1 Stunde zugetropft. Anschließend wird so lange bei 25° C gerührt, bis ein freier NCO-Gehalt von ≦0,5 % titriert wird und nicht weiter abnimmt. Die erhaltene 75 %ige Lösung hat bei 23° C eine Viskosität von 5870 mPa.s und einen blockierten NCO-Gehalt von 11,3 % (berechnet als NCO). Sie kann direkt zur Mischung mit den Polyacrylaten A) eingesetzt werden. Das gelöst vorliegende, blockierte Polyisocyanat weist lösungsmittelfrei eine Glasübergangstemperatur Tg von 3,1° C auf.

Polyisocyanat $B_2$

Hergestellt analog Polyisocyanat $B_1$, jedoch aus 972 g eines Isocyanuratgruppen aufweisenden Polyisocyanats auf Basis von 1,6-Diisocyanatohexan mit einem NCO-Gehalt von ca. 21,5 %, 470 g Toluol und 445 g Butanonoxim. Es wird eine 75 %ige Lösung erhalten, die bei 23° C eine Viskosität von 1590 mPa.s aufweist und einen blockierten NCO-Gehalt von 11,2 % (berechnet als NCO) besitzt. Das gelöst vorliegende, blockierte Polyisocyanat weist lösungsmittelfrei eine Glasübergangstemperatur Tg von -2,2° C auf.

III. Erfindungsgemäßes Verfahren und Verwendung der erfindungsgemäßen Verfahrensprodukte

Zur Formulierung der erfindungsgemäßen Pulverlacke werden die Polyacrylatpolyole A), die blockierten Polyisocyanate B), die Katalysatoren C) sowie gegebenenfalls weitere Hilfsmittel D) jeweils in einem 3-l-Dreihalskolben mit Rührer, Rückflußkühler und Thermometer 1 Stunde bei 60° C gemischt, wobei helle, klare oder leicht trübe Lösungen resultieren. Die so erhaltenen Lösungen werden gegebenenfalls weiter mit Lösungsmittel verdünnt und dann in einem handelsüblichen Sprühtrockner vollständig vom Lösungsmittel befreit, wobei die erfindungsgemäßen Pulverlacke direkt in Form eines verarbeitbaren Pulvers anfallen. Durch Sieben werden die Pulver gegebenenfalls noch von Anteilen mit einem über 0,1 mm liegenden Teilchendurchmesser befreit, dann mittels einer elektrostatischen Sprüheinrichtung auf Prüfbleche appliziert und anschließend 30 Minuten bei 150° C ausgehärtet.

Anstelle eines Sprühtrockners kann zur Entfernung des Lösungsmittels auch ein anderes Ausdampfgerät, wie z.B. ein Schlangenrohrverdampfer oder ein Ausdampfextruder verwendet werden. Dabei werden die Polymerlösungen bei einer Temperatur von ca. 150° C, einer Verweilzeit von ca. 1 Minute und einem Vakuum von ca. 200 mbar vollständig vom Lösungsmittel befreit. Anschließend erfolgt in diesem Fall nach der Abkühlung der Polymeren noch ein Granulier- und ein Mahlvorgang.

Die Lösungsmittelbeständigkeit der ca. 50 μm dicken Lackfilme wird durch einen Wischtest mit einem acetongetränkten Wattebausch geprüft. Angegeben wird die Anzahl der Doppelhübe, nach denen der Lackfilm ohne sichtbare Veränderung bleibt. Mehr als 50 Doppelhübe pro Film wurden nicht durchgeführt.

In Tabelle 2 sind die jeweiligen Formulierungen sowie die bei den lacktechnischen Prüfungen erhaltenen Prüfergebnisse aufgeführt.

Tabelle 2

| Pulverlackbindemittel (Mengenangaben in g) | | | | |
|---|---|---|---|---|
| Verwendungsbeispiel | 1 | 2 | 3 | 4 |
| Polyacrylat $A_1$ | 1375 | | | |
| Polyacrylat $A_2$ | | 1833 | | |
| Polyacrylat $A_3$ | | | 1569 | |
| Polyacrylat $A_4$ | | | | 1220 |
| Polyisocyanat $B_1$ | | | 371 | 371 |
| Polyisocyanat $B_2$ | 375 | 375 | | |
| Katalysator $C_1$ (Zinn(II)octanoat) | 9,7 | 12,0 | | 8,8 |
| Katalysator $C_2$ (Dibutylzinndilaurat) | | | 10,6 | |
| Zusatzmittel D (®Perenol F 45*) | | | | 4,4 |
| Glasübergangstemperatur (° C) | 32 | 39 | 30 | 28 |
| Glanz (60°, Gardner) | 96 | 88 | 92 | 98 |
| Erichsentiefe (mm) Aceton-Wischtest, | 5,6 | 4,2 | 5,6 | 5,9 |
| Anzahl der Doppelhübe | 50 | 50 | 50 | 50 |

* Handelsprodukt der Fa. Henkel, Düsseldorf, Verlaufshilfsmittel auf Polyacrylatbasis

# EP 0 531 862 B1

**Patentansprüche**

1.  Verfahren zur Herstellung von Pulverlacken mit einer Glasübergangstemperatur von 20 bis 80° C durch Vermischen von A) einer Polyolkomponente, B) einer Polyisocyanatkomponente mit blockierten Isocyanatgruppen, C) einer Katalysatorkomponente, bestehend aus mindestens einem Katalysator für die Reaktion zwischen blockierten Isocyanatgruppen und Hydroxylgruppen, und gegebenenfalls D) weiteren aus der Lacktechnologie bekannten Hilfs- und Zusatzmitteln, wobei die Komponenten A) und B) in solchen Mengen zum Einsatz gelangen, daß in dem Gemisch ein Äquivalentverhältnis von blockierten Isocyanatgruppen zu Hydroxylgruppen von 0,5:1 bis 1,5:1 vorliegt, dadurch gekennzeichnet, daß

    die Polyolkomponente A) eine Hydroxylzahl von 30 bis 155 und eine Glasübergangstemperatur von 30 bis 100° C aufweist und aus mindestens einem hydroxyfunktionellen Copolymerisat aus

    a) 10 bis 60 Gew.-Teilen Methylmethacrylat,
    b) 5 bis 50 Gew.-Teilen (Cyclo)Alkylestern der Acryl- und/oder Methacrylsäure mit 2 bis 12 Kohlenstoffatomen im (Cyclo)Alkylrest,
    c) 5 bis 40 Gew.-Teilen Vinylaromaten,
    d) 10 bis 35 Gew.-Teilen Hydroxylalkylester der Acryl- und/oder Methacrylsäure und
    e) 0 bis 5,0 Gew.-Teilen Acrylsäure und/oder Methacrylsäure

    besteht, wobei die Summe der Gew.-Teile der Komponenten a) bis e) 100 ergibt,
    die Polyisocyanatkomponente B) eine Glasübergangstemperatur von -45 bis +45° C aufweist und aus mindestens einem Ketoxim-blockierten Polyisocyanat, ausgewählt aus der Gruppe bestehend aus Biuret-, Isocyanurat-, Uretdion- und/oder Urethangruppen aufweisenden Lackpolyisocyanaten auf Basis von 1,6-Diisocyanatohexan und Isocyanuratgruppen und gegebenenfalls Uretdiongruppen aufweisenden Lackpolyisocyanaten auf Basis von Gemischen aus 1,6-Diisocyanatohexan und 1-Isocyanato-3,3,5-trimethyl-5-isocyanatomethyl-cyclohexan jeweils in mit Ketoxim blockierten Isocyanatgruppen, besteht, und man zur Herstellung der Pulverlacke die Komponenten A), B), C) und gegebenenfalls D) in einem inerten Lösungsmittel oder Lösungsmittelgemisch mit einem zwischen 50 und 150° C liegenden Siedepunkt oder -bereich homogen löst, dann die dabei resultierende Lösung vom Lösungsmittel befreit und gleichzeitig und/oder anschließend den hierbei anfallenden Feststoff in die Pulverform überführt.

2.  Verfahren gemäß Anspruch 1, dadurch gekennzeichnet, daß die Komponente B) einen Gehalt an Ketoxim-blockierten Isocyanatgruppen (berechnet als NCO) von 12 bis 18 Gew.-% bei einer (mittleren) NCO-Funktionalität von 3,0 bis 5,0 aufweist.

3.  Verfahren gemäß Anspruch 1 und 2, dadurch gekennzeichnet, daß die Komponente B) ein Butanonoximblockiertes Biuretpolyisocyanat oder Isocyanuratpolyisocyanat auf Basis von 1,6-Diisocyanatohexan darstellt.

4.  Verfahren gemäß Anspruch 1 bis 3, dadurch gekennzeichnet, daß die Komponente C) aus Zinn(II)-octanoat und/oder Dibutylzinn(IV)-dilaurat besteht.

5.  Verfahren gemäß Anspruch 1 bis 4, dadurch gekennzeichnet, daß als Zusatzmittel D) Verlaufsmittel und Lichtschutzmittel, gegebenenfalls neben weiteren Hilfs- und Zusatzmitteln eingesetzt werden.

6.  Verwendung der gemäß Anspruch 1 bis 5 erhältlichen Pulverlacke, gegebenenfalls nach ihrer Abmischung mit weiteren Hilfs- und Zusatzmitteln zur Herstellung von Beschichtungen auf beliebigen hitzeresistenten Substraten nach den Methoden der Pulverlacktechnologie.

7.  Verwendung gemäß Anspruch 6 zur Herstellung von Automobilklarlacken.

**Claims**

1.  A process for the production of powder lacquers having a glass transition temperature of 20 to 80° C by mixing of A) a polyol component, B) a polyisocyanate component containing blocked isocyanate groups, C) a catalyst component consisting of at least one catalyst for the reaction between blocked isocyanate groups and hydroxyl groups and, optionally, D) other auxiliaries and additives known from powder lacquer technology, components A) and B) being used in such quantities that an equivalent ratio of blocked isocyanate groups to hydroxyl groups of 0.5:1 to 1.5:1 is present in the mixture,

9

characterized in that the polyol component A) has a hydroxyl value of 30 to 155 and a glass transition temperature of 30 to 100°C and consists of at least one hydroxyfunctional copolymer of

a) 10 to 60 parts by weight of methyl methacrylate,

b) 5 to 50 parts by weight of (cyclo)alkyl esters of acrylic and/or methacrylic acid containing 2 to 12 carbon atoms in the (cyclo)alkyl component,

c) 5 to 40 parts by weight of aromatic vinyl compounds,

d) 10 to 35 parts by weight of hydroxyalkyl esters of acrylic and/or methacrylic acid,

e) 0 to 5.0 parts by weight of acrylic acid and/or methacrylic acid,

the sum of the parts by weight of components a) to e) being 100,

the polyisocyanate component B) has a glass transition temperature of -45 to +45°C and consists of at least one ketoxime-blocked polyisocyanate selected from the group consisting of biuret-, isocyanurate-, uretdione- and/or urethane-modified lacquer-grade polyisocyanates based on 1,6-diisocyanatohexane and isocyanurate- and, optionally, uretdione-modified lacquer-grade polyisocyanates based on mixtures of 1,6-diisocyanatohexane and 1-isocyanato-3,3,5-trimethyl-5-isocyanatomethyl cyclohexane and respectively containing ketoxime-blocked isocyanate groups

and, to produce the powder lacquers, components A), B), C) and, optionally, D) are homogeneously dissolved in inert solvent or solvent mixture having a boiling point or range between 50 and 150°C, the resulting solution is freed from the solvent and the solid obtained is simultaneously and/or subsequently converted into powder form.

2. A process as claimed in claim 1, characterized in that component B) has a content of ketoxime-blocked isocyanate groups (expressed as NCO) of 12 to 18% by weight for an (average) NCO functionality of 3.0 to 5.0.

3. A process as claimed in claims 1 and 2, characterized in that component B) is a butanone-oxime-blocked biuret polyisocyanate or isocyanurate polyisocyanate based on 1,6-diisocyanatohexane.

4. A process as claimed in claims 1 to 3, characterized in that component C) consists of tin(II) octanoate and/or dibutyl tin (IV) dilaurate.

5. A process as claimed in claims 1 to 4, characterized in that flow control agents and light stabilizers are used as the additives D), optionally in addition to other auxiliaries and additives.

6. The use of the powder lacquers obtainable by the process claimed in claims 1 to 5, optionally after mixing with further auxiliaries and additives, for the production of coatings on heat-resistant substrates by the methods used in powder lacquer technology.

7. The use claimed in claim 6 for the production of clear automobile lacquers.

**Revendications**

1. Procédé pour la préparation de laques, de vernis ou de peintures pulvérulents présentant une température de transition vitreuse de 20 à 80°C, en mélangeant A) un composant de polyol, B) un composant de, polyisocyanate contenant des groupes isocyanate bloqués, C) un composant de catalyseur constitué par au moins un catalyseur pour la réaction entre les groupes isocyanate bloqués et les groupes hydroxyle, et éventuellement D) d'autres adjuvants et additifs connus dans la technologie des laques, des vernis ou des peintures, dans lequel on met en oeuvre les composants A) et B) dans des quantités telles que l'on obtient, dans le mélange, un rapport d'équivalents des groupes isocyanate bloqués aux groupes hydroxyle de 0,5:1 à 1,5:1, caractérisé en ce que

le composant de polyol A) présente un indice hydroxyle de 30 à 155 et une température de transition vitreuse de 30 à 100°C et est constitué par au moins un copolymère hydroxy-fonctionnel constitué par

a) de 10 à 60 parties en poids de méthacrylate de méthyle,

b) de 5 à 50 parties en poids d'esters (cyclo)alkyliques d'acide acrylique et/ou méthacrylique contenant de 2 à 12 atomes de carbone dans le radical (cyclo)alkyle,

c) de 5 à 40 parties en poids de composés vinyl-aromatiques,

d) de 10 à 35 parties en poids d'esters hydroxyalkyliques d'acide acrylique et/ou méthacrylique, et

e) de 0 à 5,0 parties en poids d'acide acrylique et/ou d'acide méthacrylique,

dans lequel la somme des parties en poids des composants a) à e) donne 100,

le composant de polyisocyanate B) présente une température de transition vitreuse de -45 à +45°C et est constitué par au moins un polyisocyanate bloqué par une cétoxime, choisi parmi le groupe constitué par des polyisocyanates de laques, de vernis ou de peintures présentant des groupes biuret, isocyanurate, uretdione et/ou uréthanne, à base du 1,6-diisocyanatohexane, et par des polyisocyanates de laques, de vernis ou de peintures présentant des groupes isocyanurate et éventuellement des groupes uretdione, à base de mélanges du 1,6-diisocyanatohexane et du 1-isocyanato-3,3,5-triméthyl-5-isocyanatométhylcyclo-hexane, respectivement dans des groupes isocyanate bloqués par une cétoxime,

et, pour la préparation des laques, des vernis ou des peintures pulvérulents, on dissout de manière homogène les composants A), B), C) et éventuellement D) dans un solvant ou dans un mélanges de solvants inertes dont le point ou le domaine d'ébullition se situe entre 50 et 150°C, puis on libère du solvant la solution que l'on obtient en l'occurrence et on transforme simultanément et/ou ultérieurement sous forme pulvérulente la substance solide que l'on obtient en l'occurrence.

2. Procédé selon la revendication 1, caractérisé en ce que le composant B) présente une teneur en groupes isocyanate bloqués par une cétoxime (calculée comme NCO) de 12 à 18% en poids, avec une fonctionnalité NCO (moyenne) de 3,0 à 5,0.

3. Procédé selon les revendications 1 et 2, caractérisé en ce que le composant B) représente un polyisocyanate contenant un (des) groupe(s) biuret ou un polyisocyanate contenant un (des) groupe(s) isocyanurate, bloqué(s) par une butanone-oxime, à base du 1,6-diisocyanatohexane.

4. Procédé selon les revendications 1 à 3, caractérisé en ce que le composant C) est constitué par l'octanoate d'étain (II) et/ou par le dilaurate de dibutylétain(IV).

5. Procédé selon les revendications 1 à 4, caractérisé en ce que; comme additif D), on met en oeuvre des agents nivelants et des agents de protection contre la lumière, éventuellement en plus d'autres adjuvants et additifs.

6. Utilisation des laques, des vernis ou des peintures pulvérulents que l'on obtient conformément aux revendications 1 à 5, éventuellement après leur mélange avec d'autres adjuvants et additifs, pour la préparation d'enductions sur n'importe quels substrats thermorésistants conformément aux procédés de la technologie des laques, des vernis ou des peintures pulvérulents.

7. Utilisation selon la revendication 6, pour la préparation de peintures claires pour véhicules automobiles.